(19) **Europäisches Patentamt**

**European Patent Office**

**Office européen des brevets**

(11) **EP 1 674 553 A1**

(12) **EUROPEAN PATENT APPLICATION**

(43) Date of publication:
28.06.2006 Bulletin 2006/26

(51) Int Cl.:
*C10L 1/02* (2006.01)     *C10L 1/18* (2006.01)
*C10L 10/04* (2006.01)

(21) Application number: 04258152.0

(22) Date of filing: 24.12.2004

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **SHELL INTERNATIONALE RESEARCH MAATSCHAPPIJ B.V.**
**2596 HR  Den Haag (NL)**

(72) Inventors:
• **Crawshaw, Elisabeth Helen**
  **Cheshire CH2 4NU (GB)**
• **Lilley, Lisa, Caroline**
  **Cheshire CH2 4NU (GB)**
• **van Sluis, Beverley**
  **Cheshire CH2 4NU (GB)**

(54) **Altering properties of fuel compositions**

(57) The invention provides the use of a fatty acid alkyl ester (FAAE) in a diesel fuel composition for the purpose of inhibiting corrosion. The composition preferably contains no, or only low levels of, additional corrosion inhibiting additives. Further provided is the use of a FAAE in a diesel fuel composition for the purpose of reducing the level of corrosion inhibiting additives in the composition. The FAAE is preferably used at a concentration, between 0 and 100 % v/v based on the overall fuel composition, at which its corrosion inhibiting performance reaches a maximum. Thus the invention also provides a method for reducing the corrosive effects of a diesel fuel composition, by formulating a diesel base fuel with a FAAE at the determined optimal FAAE concentration.

**EP 1 674 553 A1**

**Description**

This invention relates to diesel fuel compositions, their preparation and their use in diesel engines, and to the use of certain fuel components in diesel fuel compositions for a novel purpose.

It is known to include additives in diesel fuel compositions so as to reduce the corrosive effects of the composition for instance on metal engine components.

DD-2005 298 (VEB Petrolchemisches Kombinat Schwedt) discloses a corrosion inhibiting formulation which comprises from 20 to 90 % w/w of a fatty acid alkyl ester formed from a $C_{10}$-$C_{20}$ fatty acid and a $C_1$-$C_4$ alcohol, together with from 10 to 80 % w/w of an N-acyl substituted $C_1$-$C_{20}$ sarcosine compound. It exemplifies the use of such a formulation (containing $C_{10}$-$C_{20}$ fatty acid methyl esters together with oleoyl sarcosine) in a diesel fuel composition, at a concentration of 1.5 % w/w, and demonstrates superior rust inhibition by the combination of fatty acid ester and sarcosine as compared to either of the constituents alone.

GB-2 359 500 (Illinois Tool Works) describes a corrosion inhibiting rinsing agent for use in the treatment of oil pipelines. The rinsing agent can contain a vegetable oil derived base oil such as a methyl ester base oil, in order to deposit a corrosion inhibiting oily film on the inner pipe surfaces. Further corrosion inhibiting additives are also present in the overall formulation.

It is also known that fatty acid alkyl esters (FAAEs), in particular fatty acid methyl esters (FAMEs), may be added to fuel compositions for a variety of purposes, including to reduce the environmental impact of the fuel production and use, and to improve lubricity. However the inclusion of a FAAE may bring drawbacks, if the properties of the FAAE are in any relevant respect inferior to those of the fuel composition before FAAE addition.

One example of this is the effects of FAAEs on corrosion. It is well known for instance that neat FAMEs can be highly corrosive, and can act to increase the solubility of water in diesel fuels. Indeed many FAMEs exhibit a corrosive effect at least as bad as, if not worse than, those of typical diesel base fuels. For instance in the examples of DD-2005 298, it is shown that a $C_{10}$-$C_{20}$ FAME alone, even at a concentration of 10 % w/w, has little corrosion inhibiting effect on a diesel fuel (Table 2) and after only two days appears if anything to have increased the corrosive effects of the neat base fuel.

Following conventional principles, it would be expected that the corrosive effect of a base fuel/FAAE blend would vary linearly with FAAE concentration. In other words, the addition of a FAAE to a base fuel would be expected, if the FAAE were more corrosive than the base fuel as is typically the case, to increase the corrosive effect of the base fuel to an extent directly proportional to the amount of FAAE added. Certainly no reduction in corrosive effect would be expected no matter how much FAAE were added to the base fuel.

It has now been surprisingly discovered, however, that FAAEs can produce a non-linear change in corrosive effect when blended with diesel base fuels. Moreover it has been found that at certain optimum concentrations, a FAAE can actually reduce the corrosive effect of a base fuel to a level which is often well below that of either the base fuel or the FAAE alone.

Based on this discovery, the present invention is able to provide a more optimised method for reducing the corrosive effects of a diesel fuel composition.

According to a first aspect of the present invention there is provided the use of a fatty acid alkyl ester (FAAE) in a diesel fuel composition for the purpose of inhibiting corrosion.

It is the FAAE itself that is present for the corrosion inhibiting purpose, rather than a FAAE in combination with another potentially active agent such as the sarcosines required in DD-2005 298 or the vegetable oils and/or ethanolamide corrosion inhibitors used in GB-2 359 500. In other words, the invention is based on the discovery that a fatty acid alkyl ester may have sufficient corrosion inhibiting effect as to be useable on its own to reduce corrosiveness in a diesel fuel composition.

It is surprising that FAAEs can achieve this. It is yet more surprising that the effect is non-linear with increasing FAAE concentration and that there is an optimum FAAE concentration at which a maximum in corrosion inhibiting effect can be observed - it appears that this optimum concentration has never been appreciated in the prior art, thus resulting in a perceived need for additional corrosion inhibitors.

When carrying out the method of the invention, the fuel composition may therefore contain, if desired, no other corrosion inhibiting additives. In particular it preferably contains no sarcosines, and/or no amine or amide (for example alkanolamine or alkanolamide) corrosion inhibitors, and/or no vegetable derived (non-esterified) base oils.

In particular the composition is preferably free of oleoyl sarcosine, rape seed oil, sunflower oil, polydiethanolamide and/or triethanolamine. Furthermore it need not contain emulsifier(s) as required in the corrosion inhibiting formulations of GB-2 359 500.

In the present context, "use" of a FAAE in a fuel composition means incorporating the FAAE into the composition, typically as a blend (ie, a physical mixture) with one or more other fuel components (such as diesel base fuels) and optionally with one or more fuel additives. The FAAE is conveniently incorporated before the composition is introduced into an engine which is to be run on it. Instead or in addition the use may involve running a diesel engine on the fuel composition containing the FAAE, typically by introducing the composition into a combustion chamber of the engine.

"Inhibiting corrosion" means reducing the corrosive effect of the fuel composition on metal (in particular steel) parts with which the composition comes into contact, especially parts of a combustion system (eg, an automotive engine) which contact the composition during its normal use. In particular corrosive effects may be those occurring during use of the composition in a compression ignition (diesel) engine. The terms "inhibiting" and "reducing" embrace reduction to zero; thus the FAAE may be used either completely or partially to inhibit the corrosive effects of the composition. The reduction or inhibition is as compared to the fuel composition prior to addition of the FAAE.

The corrosive effect of a fuel composition may be measured by immersing a test specimen in a sample of the fuel, introducing a small amount of water to mimic normal use conditions and assessing the speed at which the test specimen rusts, for instance either the time taken for the specimen to gather a certain level of rust or the degree of corrosion after a certain period of time. A suitable method for assessing corrosiveness is the standard test procedure ASTM D665, preferably modified as described in the example below.

Measurements of corrosive effect can be or involve either qualitative and/or quantitative assessments, whether of a corrosive effect or of any effect associated whether directly or indirectly with corrosion.

Preferably the FAAE is used in the fuel composition in an amount sufficient to reduce the corrosiveness of the composition, when tested using ASTM D665, to a level where rusting is confined to less than 50 % of the test specimen surface after 24 hours, more preferably to a level where rusting is confined to less than 25 % or 10 % or even less than 5 % of the specimen surface. The FAAE may be used in an amount sufficient to reduce the corrosiveness, under these conditions, to zero (ie, the test specimen is clear of rust after 24 hours).

When tested in this way, the FAAE may be used to reduce the corrosiveness of the composition by at least 50 % (so that the composition then causes rusting over no more than half of the specimen area that suffered rusting when the fuel composition was tested prior to addition of the FAAE).

Typically the fuel composition will contain, prior to addition of the FAAE, a major proportion of a diesel base fuel. By "major proportion" here is meant typically 80 % v/v or greater, suitably 90 or 95 % v/v or greater, most preferably 98 or 99 or 99.5 % v/v or greater or in cases 100 %. At its simplest therefore, the composition which results from carrying out the present invention will contain only a diesel base fuel and a FAAE; the invention thus embraces the addition of a FAAE to a diesel base fuel so as to reduce its corrosive effects, and the reduction may be with respect to the properties of the base fuel alone. However the fuel composition may contain other components, in particular diesel fuel additives, as will be described in more detail below.

Fatty acid alkyl esters, of which the most commonly used in the present context are the methyl esters, are already known as renewable diesel fuels (so-called "biodiesel" fuels). They contain long chain carboxylic acid molecules (generally from 10 to 22 carbon atoms long), each having an alcohol molecule attached to one end. Organically derived oils such as vegetable oils (including recycled vegetable oils) and animal fats can be subjected to a transesterification process with an alcohol (typically a $C_1$ to $C_5$ alcohol) to form the corresponding fatty esters, typically mono-alkylated. This process, which is suitably either acid- or base-catalysed such as with the base KOH, converts the triglycerides contained in the oils into fatty acid esters and free glycerol, by separating the fatty acid components of the oils from their glycerol backbone.

In the present invention, the FAAE may be any alkylated fatty acid or mixture of fatty acids. Its fatty acid component(s) are preferably derived from a biological source, more preferably a vegetable source. They may be saturated or unsaturated; if the latter, they may have one or more double bonds. They may be branched or un-branched. Suitably they will have from 10 to 30, more suitably from 10 to 22 or from 12 to 22, carbon atoms in addition to the acid group(s) -$CO_2$H. A FAAE will typically comprise a mixture of different fatty acid esters of different chain lengths, depending on its source. For instance the commonly available rapeseed oil contains mixtures of palmitic acid ($C_{16}$), stearic acid ($C_{18}$), oleic, linoleic and linolenic acids ($C_{18}$, with one, two and three unsaturated carbon-carbon bonds respectively) and sometimes also erucic acid ($C_{22}$) - of these the oleic and linoleic acids form the major proportion. Soybean oil contains a mixture of palmitic, stearic, oleic, linoleic and linolenic acids. Palm oil usually contains a mixture of palmitic, stearic and linoleic acid components.

The FAAE used in the present invention is preferably derived from a natural fatty oil, for instance a vegetable oil such as rapeseed oil, soybean oil, coconut oil, sunflower oil, palm oil, peanut oil, linseed oil, camelina oil, safflower oil, babassu oil, tallow oil or rice bran oil. It may in particular be an alkyl ester (suitably the methyl ester) of rapeseed, soy, coconut or palm oil, more preferably either coconut or palm oil.

The FAAE is preferably a $C_1$ to $C_5$ alkyl ester, more preferably a methyl, ethyl or propyl (suitably isopropyl) ester, yet more preferably a methyl or ethyl ester and in particular a methyl ester.

It may for example be selected from the group consisting of rapeseed methyl ester (RME, also known as rape oil methyl ester or rape methyl ester), soy methyl ester (SME, also known as soybean methyl ester), palm oil methyl ester (POME), coconut methyl ester (CME) (in particular refined CME; the refined product is based on the crude but with some of the higher and lower alkyl chains (typically the $C_6$, $C_8$, $C_{10}$, $C_{16}$ and $C_{18}$) components removed) and mixtures thereof. In general it may be either natural or synthetic, refined or unrefined ("crude").

It may be preferred for the FAAE not to be methyl tallowate, methyl oleate and/or the fatty acid alkyl ester(s) present in the product Epoil™ HL (Hornett Bros), referred to in GB-2 359 500.

The FAAE suitably complies with specifications applying to the rest of the fuel composition, and/or to the base fuel which forms the major proportion of the composition, bearing in mind the intended use to which the composition is to be put (eg, in which geographical area and at what time of year). In particular, the FAAE preferably has a flash point (IP 34) of greater than 101 °C; a kinematic viscosity at 40 °C (IP 71) of 1.9 to 6.0 centistokes, preferably 3.5 to 5.0 centistokes; a density from 845 to 910 kg/m$^3$, preferably from 860 to 900 kg/m$^3$, at 15 °C (IP 365, EN ISO 12185 or EN ISO 3675); a water content (IP 386) of less than 500 ppmw (parts per million by weight); a T95 (the temperature at which 95 % of the fuel has evaporated, measured according to IP 123) of less than 360 °C; an acid number (IP 139) of less than 0.8 mgKOH/g, preferably less than 0.5 mgKOH/g; and an iodine number (IP 84) of less than 125, preferably less than 120 or less than 115, grams of iodine ($I_2$) per 100 g of fuel. It also preferably contains (eg, by NMR) less than 0.2 % w/w of free methanol, less than 0.02 % w/w of free glycerol and greater than 96.5 % w/w esters. In general it may be preferred for the FAAE to conform to the European specification EN 14214 for fatty acid methyl esters for use as diesel fuels.

Two or more FAAEs may be added to the base fuel in accordance with the invention, either separately or as a pre-prepared blend, so long as their combined effect is to reduce the corrosiveness of the resultant composition.

The FAAE may be added to the fuel composition for one or more other purposes in addition to the desire to inhibit corrosion, for instance to improve environmental performance (including to reduce emissions), to improve lubricity and/or to reduce costs.

In general the FAAE may be used'at a concentration (based on the overall fuel composition) of up to 25 % v/v, suitably up to 20 % v/v, more preferably up to 10 % or 5 % or 2 % v/v. Its minimum concentration may be 0.5 % v/v, suitably 1 % or 1.5 % or in cases 2 % or 5 % or 10 % v/v.

However the optimal concentration for the FAAE will depend on the nature of the FAAE and of the other fuel components in the composition. Where the FAAE is rapeseed methyl ester, for example, its concentration is suitably 10 % v/v or lower, more suitably 8 % v/v or lower, most suitably 5 % v/v or lower, such as from 1 to 5 % v/v.

Where the FAAE is soy methyl ester, its concentration is suitably 10 % v/v or lower, more suitably 8 % v/v or lower, most suitably 5 % v/v or lower, such as from 1 to 5 % v/v.

Where the FAAE is coconut methyl ester its concentration is suitably 30 % v/v or lower, more suitably 25 % v/v or lower, most suitably 20 % v/v or lower. Its concentration is preferably 2 % or 5 % v/v or greater, more preferably 8 or 10 or 15 % v/v or greater, such as from 2 to 25 % v/v or from 2 to 20 % v/v.

Where the FAAE is palm oil methyl ester its concentration is suitably 15 % v/v or lower, more suitably 12 % v/v or lower, most suitably 10 % or lower. Its concentration is preferably 2 % v/v or greater, more preferably 5 or 7 or 8 % v/v or greater, such as from 5 to 15 % v/v or from 7 to 13 % v/v.

As described above, the fuel composition in which the FAAE is used will typically contain a major proportion of a diesel base fuel. This base fuel may be any known diesel base fuel, and it may itself comprise a mixture of diesel fuel components. It will preferably have a sulphur content of at most 2000 ppmw. More preferably it will have a low or ultra low sulphur content, for instance at most 500 ppmw, preferably no more than 350 ppmw, most preferably no more than 100 or 50 or even 10 ppmw, of sulphur. It may even be a so-called "zero sulphur diesel". A mixture of the base fuel and the FAAE will also preferably have a sulphur content within these ranges.

Typical diesel fuel components may comprise liquid hydrocarbon middle distillate fuel oils, for instance petroleum derived gas oils.

Such base fuel components may be organically or synthetically derived. They will typically have boiling points within the usual diesel range of 150 to 400 °C, depending on grade and use. They will typically have densities from 0.75 to 0.9 g/cm$^3$, preferably from 0.8 to 0.86 g/cm$^3$ , at 15 °C (eg, ASTM D4502 or IP 365) and cetane numbers (ASTM D613) of from 35 to 80, more preferably from 40 to 75 or 70. Their initial boiling points will suitably be in the range 150 to 230 °C and their final boiling points in the range 290 to 400 °C. Their kinematic viscosity at 40 °C (ASTM D445) might suitably be from 1.5 to 4.5 centistokes.

Again, the fuel composition which results from carrying out the present invention will also preferably fall within these general specifications. Such fuel compositions are generally suitable for use in a compression ignition (diesel) internal combustion engine, of either the indirect or direct injection type.

A petroleum derived gas oil may be obtained from refining and optionally (hydro)processing a crude petroleum source. It may be a single gas oil stream as obtained in such a refinery process or be a blend of several gas oil fractions obtained in the refinery process via different processing routes. Examples of such gas oil fractions are straight run gas oil, vacuum gas oil, gas oil as obtained in a thermal cracking process and light and heavy cycle oil as obtained in a fluid catalytic cracking unit and gas oil as obtained from a hydrocracker unit. Optionally a petroleum derived gas oil may comprise some petroleum derived kerosene fraction.

Such gas oils may be processed in a hydrodesulphurisation (HDS) unit so as to reduce their sulphur content to a level suitable for inclusion in a diesel fuel composition.

The base fuel may be or contain another so-called "biodiesel" fuel component, such as an alcohol (in particular methanol or ethanol) or other oxygenate or a vegetable oil or vegetable oil derivative.

It may be or contain a Fischer-Tropsch derived fuel, in particular a Fischer-Tropsch derived gas oil. Such fuels are known and in use in diesel fuel compositions. They are, or are prepared from, the synthesis products of a Fischer-Tropsch condensation reaction, as for example the commercially used gas oil obtained from the Shell Middle Distillate Synthesis (Gas To Liquid) process operating in Bintulu (Malaysia).

The method of the present invention may additionally or alternatively be used to adjust any property of the diesel fuel composition which is equivalent to or directly or indirectly associated with corrosive effects.

The diesel fuel composition which results from carrying out the present invention may if desired contain no, or only low levels of, other corrosion inhibiting additives. A "low level" in this context is suitably 200 ppmw or less, preferably 100 or 50 ppmw or less, yet more preferably 25 or 10 or 5 ppmw or less.

The invention thus embraces the use of a FAAE in a diesel fuel composition for the purpose of reducing the level of corrosion inhibiting additives in the composition. Again the term "reducing" embraces reduction to zero; in other words, the FAAE may be used to replace one or more corrosion inhibiting additives either partially or completely. The reduction may be as compared to the level of the relevant additive(s) which would otherwise have been incorporated into the fuel composition in order to achieve a desired target level of corrosiveness, for instance in order to meet government fuel specifications or consumer expectations. Thus the FAAE can help in reducing the overall additive levels in the composition and their associated costs.

Preferably the FAAE is used to reduce the w/w concentration of the relevant additive(s) in the fuel composition by at least 10 %, more preferably by at least 20 or 30 %, yet more preferably by at least 50 or 70 or 80 or even 90 % or, as described above, by 100 %.

It may for instance be used to replace corrosion inhibiting additive(s) to an extent that the concentration of corrosion inhibiting additives remaining in the fuel composition is 300 ppmw or less, preferably 200 ppmw or less, more preferably 100 or 50 ppmw or less. It may be used to replace corrosion inhibiting additive(s) substantially entirely, the fuel composition being nearly or essentially free of such additives and containing for example 10 or 5 ppmw or less, preferably 1 ppmw or less of corrosion inhibiting additives.

(All additive concentrations quoted in this specification refer, unless otherwise stated, to active matter concentrations by mass. References to "corrosion inhibiting additives" in this context mean additives, other than the FAAE, which can reduce the amount of corrosion caused by a diesel fuel composition during its normal use.)

Subject to the above, a diesel fuel composition prepared according to the invention may contain other components in addition to the diesel base fuel and the FAAE. Typically such components will be incorporated in fuel additives. Examples include detergents such as polyolefin substituted succinimides or succinamides of polyamines, for instance polyisobutylene succinimides or polyisobutylene amine succinamides, aliphatic amines, Mannich bases or amines and polyolefin (eg, polyisobutylene) maleic anhydrides (suitable detergents can be obtained from Infineum (eg, F7661 and F7685) and Octel (eg, OMA 4130D)); lubricity enhancers such as EC 832 and PARADYNE™ 655 (ex Infineum), HITEC™ E580 (ex Ethyl Corporation) and VEKTRON™ 6010 (ex Infineum) and amide-based additives such as those available from the Lubrizol Chemical Company, for instance LZ 539 C; dehazers, eg, alkoxylated phenol formaldehyde polymers such as those commercially available as NALCO™ EC5462A (formerly 7D07) (ex Nalco), and TOLAD™ 2683 (ex Petrolite); anti-foaming agents (eg, the polyether-modified polysiloxanes commercially available as TEGOPREN™ 5851 and Q 25907 (ex Dow Corning), SAG™ TP-325 (ex OSi) and RHODORSIL™ (ex Rhone Poulenc)); anti-rust agents (eg, that sold commercially by Rhein Chemie, Mannheim, Germany as "RC 4801", a propane-1,2-diol semi-ester of tetrapropenyl succinic acid, or polyhydric alcohol esters of a succinic acid derivative, the succinic acid derivative having on at least one of its alpha-carbon atoms an unsubstituted or substituted aliphatic hydrocarbon group containing from 20 to 500 carbon atoms, eg, the pentaerythritol diester of polyisobutylene-substituted succinic acid); reodorants; anti-wear additives; anti-oxidants (eg, phenolics such as 2,6-di-tert-butylphenol, or phenylenediamines such as N,N′-di-sec-butyl-p-phenylenediamine); metal deactivators; and combustion improvers.

Subject to the above comments regarding the possible reduction in such additives, the fuel composition may also contain corrosion inhibitors.

The fuel composition will suitably contain only a minor amount of such additives. Thus unless otherwise stated, the (active matter) concentration of each such additional component in the overall fuel composition is preferably up to 1 % w/w, more preferably in the range from 5 to 1000 ppmw, advantageously from 75 to 300 ppmw, such as from 95 to 150 ppmw.

It may be preferred that a lubricity enhancer be included in the composition, especially when it has a low (eg, 500 ppmw or less) sulphur content. The lubricity enhancer is conveniently present at a concentration from 50 to 1000 ppmw, preferably from 100 to 1000 ppmw, based on the overall fuel composition. However since the FAAE may itself help to improve lubricity, lower levels of non-FAAE lubricity enhancers may be sufficient.

Additives may be added at various stages during the production of a fuel composition; those added at the refinery for example might be selected from anti-static agents, pipeline drag reducers, flow improvers (eg, ethylene/vinyl acetate copolymers or acrylate/maleic anhydride copolymers) and wax anti-settling agents (eg, those commercially available under the Trade Marks "PARAFLOW" (eg, PARAFLOW™ 450, ex Infineum), "OCTEL" (eg, OCTEL™ W 5000, ex Octel) and "DODIFLOW" (eg, DODIFLOW™ v 3958, ex Hoechst)). When carrying out the method of the invention, the diesel base fuel may already contain such refinery additives. Other additives may be added downstream of the refinery.

In accordance with the present invention, the FAAE is preferably used at a concentration, between 0 and 100 % v/v based on the overall fuel composition, at which the corrosion inhibiting performance of the FAAE reaches a maximum. This maximum may appear at a different concentration for each FAAE. The concentration at which the FAAE is used is preferably chosen so as to achieve a reduced level of corrosion compared to that caused by the FAAE alone. It should also achieve a reduced level of corrosion compared to that caused by the fuel composition without the FAAE present.

When carrying out the method of the first aspect of the invention, the FAAE may be used in the fuel composition for one or more other purposes in addition to the desire to reduce corrosion, for instance to reduce life cycle greenhouse gas emissions or to improve lubricity. In such cases it may be sufficient, for the purposes of the invention, that the corrosive effects of the resultant fuel composition be no worse than, or not substantially worse than, the corrosive effects of the composition before addition of the FAAE; in other words the corrosive effects of the composition are maintained alongside the other purposes achieved by addition of the FAAE.

In this context "maintenance" of the corrosive effects may mean that when tested using ASTM D665 for a 24 hour period, the test specimen surface area affected by rusting is no more than 10 % greater than when the fuel composition is tested under the same conditions prior to addition of the FAAE. Preferably "maintenance" means that under these conditions the specimen surface area affected by rusting does not increase at all.

The present invention therefore also embraces the use of a FAAE in a diesel fuel composition for two or more simultaneous purposes, one of which is to maintain the corrosive effects of the composition below a certain desired level. This desired level may be the level exhibited by the composition prior to addition of the FAAE.

The amount of FAAE used to achieve any particular level of corrosiveness in the overall composition will typically be different to that which linear blending rules would have predicted to be appropriate. Thus even though the neat FAAE is more corrosive than the fuel composition before FAAE addition, it may be possible to include more FAAE in the composition than linear blending rules would predict whilst still keeping below a desired maximum level of corrosion.

Thus according to a second aspect of the present invention there is provided a method for adjusting (typically reducing) the corrosiveness of a diesel fuel composition which contains a major proportion of a diesel base fuel, in order to reach a target level of corrosiveness X, which method comprises adding to the base fuel an amount x of a fatty acid alkyl ester (FAAE), the corrosiveness B of the FAAE being greater than the corrosiveness A of the base fuel, wherein x is greater than the amount of FAAE which, if linear blending rules applied, could be added to the base fuel whilst still achieving the target level of corrosiveness X.

The target level of corrosiveness X may be zero for instance when measured using the standard test ASTM D665 (sample immersion for 24 hours). Alternatively the target level may be greater than zero, for instance a level of rusting no greater than 10 % or 5 % of the test specimen surface when tested using ASTM D665 for 24 hours.

"Achieving" a target level of corrosiveness X embraces reaching level X or any lower level. The target X may be below the level of corrosiveness exhibited by the base fuel alone and/or by the FAAE alone.

As described above, linear blending rules would apply if the corrosiveness of the base fuel/FAAE mixture varied linearly with FAAE concentration. If this were the case, then it would be straightforward to calculate the amount of FAAE which could be added to the base fuel whilst still achieving a level of corrosiveness at or below X. However, as already explained it has been found that in certain circumstances a FAAE can actually reduce the corrosiveness of a base fuel below the level that would be expected if linear blending rules applied, even to below the level exhibited by the base fuel alone. This can allow a higher amount of FAAE to be used in the fuel composition whilst still achieving the target X.

Since it may be desirable to add a FAAE to the composition for other reasons, for example to reduce life cycle greenhouse gas emissions associated with the composition or to improve its lubricity, the ability to use the FAAE for the additional purpose of reducing corrosiveness, or at least without or without undue detriment to corrosion performance, can provide formulation advantages.

In the present context, a "major proportion" of a diesel base fuel means typically 80 % v/v or greater, more suitably 90 or 95 % v/v or greater, yet more suitably 98 or 99 or 99.5 % v/v or greater or in cases 100 %.

Again the FAAE will typically be added to the diesel base fuel as a blend (ie, a physical mixture), conveniently before the overall composition is introduced into an internal combustion engine or other system which is to be run on the fuel composition. Other fuel components and/or fuel additives may also be incorporated into the composition, either before or after addition of the FAAE and either before or during use of the composition in a combustion system.

The amount of FAAE added will depend on the natures of the base fuel and FAAE in question and on the desired target level of corrosiveness. In general, the volume fraction v of FAAE in the resultant base fuel/FAAE mixture will be greater than the volume fraction v' which would be possible if linear blending rules applied, wherein v' would be defined by the equation :

$$X = A + v'(B-A).$$

The volume fractions v and v' must each have a value between 0 and 1. When carrying out the method of the invention the actual volume fraction of FAAE, v, may be at least 0.02 or 0.05 greater than the "linear" volume fraction v', more preferably at least 0.08 or 0.1 greater, most preferably at least 0.15 or 0.2 greater than v'. In absolute terms, the actual volume fraction v is preferably 0.25 or less, more preferably 0.22 or less, yet more preferably 0.2 or 0.15 or 0.1 or 0.07 or less. It may for example be from 0.01 to 0.25, preferably from 0.02 to 0.25, more preferably from 0.05 or 0.1 to 0.2.

Thus as a result of carrying out the method of the second aspect of the invention, the concentration of FAAE in the overall fuel composition (or at least in the base fuel/FAAE mixture) will preferably be as described above in accordance with the first aspect of the invention.

If two or more FAAEs are added to the base fuel, then the total amount x' of the two or more FAAEs should be greater than the amount of that same combination of FAAEs which, if linear blending rules applied for both or all of the FAAEs, could be added to the base fuel whilst still achieving the target level of corrosiveness X.

As described above, when a FAAE is added to a diesel base fuel it appears to demonstrate its maximum corrosion inhibiting performance at a particular optimum concentration. Its corrosion inhibiting performance at that concentration can lead to a corrosiveness below that of either the base fuel or the FAAE alone. In other words, the change in corrosiveness as a function of increasing FAAE concentration is not linear, but reaches at least one maximum at a FAAE volume fraction $v_{opt}$ somewhere between 0 and 1. At and around this point, if the corrosiveness of the neat FAAE is greater than that of the base fuel, then a greater amount of the FAAE may be added than linear blending rules would predict were possible without a detrimental effect on corrosion performance.

According to the second aspect of the invention, the FAAE is preferably added at a volume fraction (based on the resultant base fuel/FAAE mixture) equal to $v_{opt}$ or within 0.2, more preferably within 0.1 or 0.05 or 0.02, of $V_{opt}$.

There may be more than one optimum concentration for some FAAEs - in other words, the change in corrosiveness with FAAE concentration may exhibit more than one minimum. In such cases, the volume fraction of FAAE may be at, or within the specified proximity to, any of the optimum values.

When carrying out the method of the second aspect of the invention, the volume fraction v will typically be 0.25 or less, more preferably 0.2 or 0.15 or less, yet more preferably 0.1 or 0.07 or 0.05 or 0.02 or less. It may for example be from 0.01 to 0.3, preferably from 0.02 to 0.25, more preferably from 0.05 or 0.1 to 0.2. Preferred concentrations for individual FAAEs may be as defined above in connection with the first aspect of the invention.

In accordance with the invention, "use" of a FAAE in the ways described above may also embrace supplying a FAAE, or a formulation containing a FAAE, together with instructions for its use in a diesel fuel composition to reduce the corrosiveness of the composition and/or to reduce the level of corrosion inhibiting or other additives in the composition and/or to achieve a target maximum level of corrosiveness X. The FAAE may be supplied as a component of a formulation suitable and/or intended for use as a fuel additive, in which case the FAAE may be included in the formulation for the purpose of influencing the effects of the overall formulation on the corrosiveness of a fuel composition.

Other preferred features of the second aspect of the invention, for instance the natures of the FAAE and the base fuel, and the preference for no, or only low levels of, other corrosion inhibiting additives, may be as described above in connection with the first aspect of the invention.

The method of the first and/or the second aspect of the invention may form part of a process for, or be implemented using a system for, controlling the blending of a fuel composition, for example in a refinery. Such a system will typically include means for introducing a FAAE and a diesel base fuel into a blending chamber, flow control means for independently controlling the volumetric flow rates of the FAAE and the base fuel into the chamber, means for calculating the volume fraction of the FAAE needed to achieve a desired target level of corrosiveness input by a user and means for directing the result of that calculation to the flow control means which is then operable to achieve the calculated volume fraction in the product composition by altering the flow rates of its constituents into the blending chamber.

In order to calculate the required volume fraction, a process or system of this type will suitably make use of known corrosiveness indicators for the base fuel and FAAE concerned, and conveniently also a model predicting the corrosiveness of varying concentration blends of the two according to linear blending rules. The process or system may then, according to the invention, select and produce a FAAE volume fraction different to (typically higher than) that predicted by the linear blending model to be appropriate. It may use a so-called quality estimator which will provide, using a model, a real-time prediction of the corrosiveness of each resulting blend from available raw process measurements, such as for example the measured levels of corrosiveness and the volumetric flow rates of the constituents. More preferably such a quality estimator is calibrated on-line by making use of for example a method analogous to that described in WO-A-02/06905.

The methods of the invention may thus conveniently be used to automate, at least partially, the formulation of a fuel composition, preferably providing real-time control over the relative proportions of the FAAE and base fuel incorporated into the composition, for instance by controlling their relative flow rates.

According to a third aspect, the present invention provides a method for reducing the corrosive effects of a diesel fuel composition, and/or for preparing a diesel fuel composition with a degree of corrosiveness at or below a desired target level X, the method comprising selecting a diesel base fuel and a fatty acid methyl ester (FAAE); measuring the corrosiveness of mixtures of, the base fuel and FAAE at 2 or more, preferably 3 or 5 or 7 or more, FAAE concentrations between 0 and 100 % v/v; determining an optimal FAAE concentration, or a range of optimal FAAE concentrations, where the corrosive effect is lower than that of the base fuel alone, and preferably where the corrosive effect reaches a minimum level; and formulating a diesel fuel composition containing the diesel base fuel and the FAAE at the optimal concentration or at a concentration within the optimal range.

This method may be used in a similar fashion to that of the second aspect of the invention.

Preferred features of the second and third aspects of the invention may be as described above in connection with the first aspect.

A fourth aspect of the invention provides a diesel fuel composition prepared or preparable using a method according to the first, second and/or third aspect. This composition will suitably contain a major proportion of a diesel base fuel having an ultra low'sulphur content (for example, less than 50 ppmw).

A fifth aspect of the invention provides a diesel fuel composition - which may have been prepared, or be preparable, using a method according to the first, second and/or third aspect - containing a diesel base fuel and a FAAE and less than 100 ppmw of, preferably less than 50 ppmw of, more preferably no, other corrosion inhibiting additives. This composition preferably contains no Fischer-Tropsch derived gas oils. The FAAE concentration may be up to 20 % v/v, suitably up to 10 or 8 or 5 % v/v.

Fuel compositions according to the invention are preferably manufactured and supplied on a commercial scale rather than in laboratory scale experiments at quantities typically less than 100 or even less than 50 litres. The invention further provides such compositions for use and/or sale on a commercial scale, and a method of preparing such compositions on a commercial scale, such as in quantities of greater than 100, preferably greater than 500 or 1,000 litres.

The invention also provides a method of operating a diesel engine, and/or a vehicle which is driven by a diesel engine, which method involves introducing into a combustion chamber of the engine a diesel fuel composition according to the fourth, fifth or sixth aspect. The fuel composition may be used in this way for the purpose of reducing corrosion of engine parts during use of the fuel.

Preferred features of the fourth and other aspects of the invention may be as described above in connection with the first, second and third aspects.

Other features of the present invention will become apparent from the following example. Generally speaking the invention extends to any novel one, or any novel combination, of the features disclosed in this specification (including the accompanying claims). Moreover unless stated otherwise, any feature disclosed herein may be replaced by an alternative feature serving the same or a similar purpose.

The example demonstrates the ability of FAAEs to inhibit corrosion in various diesel base fuels.

Example

Four different diesel base fuels, F1 to F4, were formulated with two different FAAEs and the corrosive effects of the blends were assessed at varying FAAE concentrations. The corrosive effects of the neat base fuels and FAAEs were also assessed for comparison.

The base fuels used were an EU specification low sulphur (~400 ppmw) diesel base fuel F1; an EU specification ultra low sulphur (~30 ppmw) diesel base fuel F2, containing refinery additives (fuel F2 contained no corrosion inhibitor); a base fuel F3 which was the same as F2 but without refinery additives; and a US specification low sulphur (- 300 ppmw) diesel base fuel F4. Their properties are shown in Table A.

Table A

| Fuel property | Test method | Base fuel F1 | Base fuel F2 | Base fuel F3 | Base fuel F4 |
|---|---|---|---|---|---|
| Density @ 15 °C (kg/m$^3$) | IP 365 | 850 | 830.1 | 829.6 | 843.8 |
| Measured cetane number | ASTM D613 | 54 | 52.9 | 55.8 | 50.6 |
| Kinematic viscosity @ 40 °C (centistokes) | IP 71 | 3.699 | 2.499 | 2.769 | 3.07 |

Table continued

| Fuel property | Test method | Base fuel F1 | Base fuel F2 | Base fuel F3 | Base fuel F4 |
|---|---|---|---|---|---|
| Distillation (°C) | IP 123 | | | | |
| IBP | | 191.4 | 168 | 160.6 | 214 |
| 10% recovery | | 241.7 | 201 | 201.9 | 234 |
| 20% | | 259.8 | 220 | 226.7 | 244 |
| 30% | | 271.4 | 240 | 246.2 | 255 |
| 40% | | 281.2 | 256 | 262 | 265 |
| 50% | | 289.5 | 269 | 274.3 | 275 |
| 60% | | 298.9 | 280.5 | 285.5 | 284.5 |
| 70% | | 308.8 | 291.5 | 296.7 | 294 |
| 80% | | 320.6 | 303.5 | 309.2 | 306 |
| 900 | | 336.9 | 319.5 | 325.6 | 322.5 |
| 95% | | 350.4 | 335.5 | 338.4 | 337.5 |
| FBP | | 363.2 | 349 | 353 | 350 |
| Cold filter plugging point (°C) | IP 309 | -9 | -19 | -8 | -13 |
| Cloud point (°C) | IP 219 | -3 | -10 | -7 | -12 |
| Flash point (°C) | IP 34 | 84 | 61 | 62 | 92 |
| Sulphur (ppmw) | ASTM D2622 | 397 | 30 | 28 | 293 |
| Iodine number IP | 84 | 18 | 18 | 16 | 17 |
| Acid number (total) (mgKOH/g) | IP 139 | <0.03 | <0.03 | <0.03 | 0.03 |

The FAAEs tested were rapeseed methyl ester (RME) and soy methyl ester (SME).

The corrosion properties of each formulation were measured by a method analogous to ASTM D665 ("Standard Test Method for Rust-Preventing Characteristics of Inhibited Mineral Oil in the Presence of Water"). The ASTM method is designed for use with lubricating oils, and in the present case was modified slightly to take into account the low additive concentrations present in the overall fuel compositions.

For each formulation being tested, a suitably prepared and polished mild steel test specimen was placed in the formulation in a clean dry beaker and the beaker contents stirred for 30 minutes to allow the specimen to be coated with the fuel formulation. 30 ml of distilled water were then added to the sample, taking care not to expose the specimen to the atmosphere. The samples were left for 24 hours, at a temperature of approximately 60 °C.

The steel specimens were then removed, washed with isooctane and photographed under normal lighting conditions. They were subsequently rated visually, from the photographs, for the amount of rusting.

The results are shown in Table 1. They include an approximation of the specimen surface area affected by rusting, plus an assessment of the nature of the rusting (for instance, the neat FAAEs tended to cause a very intense degree of rusting even though over a smaller surface area than at lower FAAE levels).

Table 1

| Base fuel | FAAE | FAAE concentration (% v/v) | Visual assessment |
|---|---|---|---|
| F1 | N/A | 0 | -95 % orange/brown rust |
| F1 | RME | 2 | -10 % orange/brown rust |
| F1 | RME | 5 | -60 % orange/brown rust |
| F1 | RME | 20 | -95 % brown rust |
| N/A | RME | 100 | -70 % dense orange/brown rust |

Table continued

| Base fuel | FAAE | FAAE concentration (% v/v) | Visual assessment |
|---|---|---|---|
| F2 | N/A | 0 | -30 % orange/brown rust |
| F2 | RME | 2 | ~10 % orange/brown rust |
| F2 | RME | 5 | ~15 % orange/brown rust |
| F2 | RME | 20 | -95 % orange/brown rust |
| F2 | SME | 5 | -90 % blackish rust |
| F2 | SME | 20 | ~100 % blackish rust |
| N/A | SME | 100 | ~100 % dense brown rust |
| F3 | N/A | 0 | -80 % orange rust |
| F3 | RME | 5 | -30 % orange/brown rust |
| F3 | RME | 20 | -90 % brown rust |
| F4 | N/A | 0 | -50 % blackish rust |
| F4 | SME | 5 | -10 % blackish rust |
| F4 | SME | 20 | -80 % blackish rust |

These data show that FAAEs can, if used at appropriate concentrations, significantly reduce the corrosive effects of diesel base fuels, to levels below those of either the FAAE or the base fuel alone. The optimal concentration, at which least corrosion is seen in these tests, differs for each FAAE/base fuel system.

A similar phenomenon was observed when palm oil methyl ester (POME) was tested in a zero-sulphur diesel base fuel, where the optimum POME concentration for corrosion inhibition occurred at around 10 % v/v. When refined coconut methyl ester (CME) was tested in the base fuel F2, again an optimum FAAE concentration was observed between approximately 10 and 25 % v/v CME, particularly around 20 % v/v.

Based on these surprising results, the present invention therefore makes possible the formulation of diesel fuels containing optimal levels of the "biodiesel" FAAEs, without detriment to the corrosion performance of the fuels.

## Claims

1.  Use of a fatty acid alkyl ester (FAAE) in a diesel fuel composition for the purpose of inhibiting corrosion.

2.  Use according to claim 1, wherein the fuel composition contains less than 100 ppmw (parts per million by weight) of additional corrosion inhibiting additives.

3.  Use of a FAME in a diesel fuel composition for the purpose of reducing the level of corrosion inhibiting additives in the composition.

4.  Use according to any one of the preceding claims, wherein the FAAE is a fatty acid methyl, ethyl or isopropyl ester.

5.  Use according to any one of the preceding claims, wherein the FAAE is used at a concentration, based on the overall fuel composition, of from 0.5 to 25 % v/v.

6.  Use according to any one of the preceding claims, wherein the FAAE is palm oil methyl ester and is used at a concentration, based on the overall fuel composition, of from 5 to 15 % v/v.

7.  Use according to any one of the preceding claims, wherein the FAAE is used at a concentration, between 0 and 100 % v/v based on.the overall fuel composition, at which the corrosion inhibiting performance of the FAAE reaches a maximum.

8.  A method for reducing the corrosive effects of a diesel fuel composition, and/or for preparing a diesel fuel composition with a degree of corrosiveness at or below a desired target level X, the method comprising selecting a diesel base fuel and a FAAE; measuring the corrosiveness of mixtures of the base fuel and FAAE at two or more FAAE concentrations between 0 and 100 % v/v; determining an optimal FAAE concentration, or a range of optimal FAAE concentrations, where the corrosive effect is lower than that of the base fuel alone, and preferably where the corrosive effect reaches a minimum level; and formulating a diesel fuel composition containing the diesel base fuel and the FAAE at the'optimal concentration or at a concentration within the optimal range.

9. A diesel fuel composition containing a diesel base fuel and a FAAE and less than 50 ppmw of other corrosion inhibiting additives, the composition containing no Fischer-Tropsch derived gas oils.

EP 1 674 553 A1

**European Patent Office**

**EUROPEAN SEARCH REPORT**

Application Number

EP 04 25 8152

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | DD 200 529 A1 (MALY,MANFRED,DD; METZSCH,ALBRECHT,DD; MUELLER,PETER,DD) 11 May 1983 (1983-05-11) * page 4, line 4 - line 10; claims 1-3; example 2; tables 2,3 * * page 5, line 13 - line 18 * | 1-9 | C10L1/02 C10L1/18 C10L10/04 |
| X | FR 2 498 622 A (INSTITUT FRANCAIS DU PETROLE; INSTITUT FRANCAIS PETROLE) 30 July 1982 (1982-07-30) | 9 | |
| A | * claims 1-9; tables 4,5 * | 1-7 | |
| X | GB 2 099 449 A (ERNER WILLIAM EDWARD) 8 December 1982 (1982-12-08) | 9 | |
| A | * page 3, line 55 - line 57; claims 5-7; examples 1,2 * | 1-5,7 | |
| X | WO 95/25152 A (VALTION TEKNILLINEN TUTKIMUSKESKUS; NYLUND, NILS-OLOF; SIPILAE, KAI) 21 September 1995 (1995-09-21) | 9 | |
| A | * claims 1-9; example 1 * | 1-5,7 | TECHNICAL FIELDS SEARCHED (Int.Cl.7) C10L |
| X | DE 101 11 857 A1 (RADIG, WOLFRAM) 12 September 2002 (2002-09-12) | 9 | |
| A | * claim 1; example 1 * | 1-5,7 | |
| A | WO 2004/035713 A (SHELL INTERNATIONALE RESEARCH MAATSCHAPPIJ B.V) 29 April 2004 (2004-04-29) * page 6, line 4 - line 29; claims 1-3,5,8; example 2; table 1 * * page 19, line 9 * * page 19, line 18 * | 1,3-5,7,8 | |

-/--

The present search report has been drawn up for all claims

| Place of search | Date of completion of the search | Examiner |
|---|---|---|
| The Hague | 15 June 2005 | de La Morinerie, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

12

**European Patent Office**

## EUROPEAN SEARCH REPORT

Application Number

EP 04 25 8152

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 03/022960 A (PENNZOIL-QUAKER STATE COMPANY; FANG, JIAFU; GUNSEL, SELDA) 20 March 2003 (2003-03-20) * page 6, line 15 - line 18; claim 44; examples 1,2,4,5 * * page 6, line 25 - page 7, line 5 * ----- | 1,3-5,7 | |
| A | GB 1 505 302 A (AUTOL AG) 30 March 1978 (1978-03-30) * claim 1 * ----- | 1 | |
| D,A | WO 02/06905 A (SHELL INTERNATIONALE RESEARCH MAATSCHAPPIJ B.V; HUPKES, WIM; VIEL, FRE) 24 January 2002 (2002-01-24) * claim 1 * ----- | 8 | |

TECHNICAL FIELDS SEARCHED (Int.Cl.7)

The present search report has been drawn up for all claims

| Place of search | Date of completion of the search | Examiner |
|---|---|---|
| The Hague | 15 June 2005 | de La Morinerie, B |

EPO FORM 1503 03.82 (P04C01)

**ANNEX TO THE EUROPEAN SEARCH REPORT
ON EUROPEAN PATENT APPLICATION NO.**

EP 04 25 8152

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2005

| Patent document cited in search report | | | Publication date | Patent family member(s) | | | Publication date |
|---|---|---|---|---|---|---|---|
| DD 200529 | A1 | | 11-05-1983 | NONE | | | |
| FR 2498622 | A | | 30-07-1982 | FR | 2498622 | A1 | 30-07-1982 |
| | | | | BR | 8108111 | A | 21-09-1982 |
| | | | | BR | 8108488 | A | 19-10-1982 |
| | | | | BR | 8108559 | A | 19-10-1982 |
| | | | | DE | 3149170 | A1 | 29-07-1982 |
| | | | | DE | 3150988 | A1 | 05-08-1982 |
| | | | | DE | 3150989 | A1 | 05-08-1982 |
| | | | | GB | 2090611 | A ,B | 14-07-1982 |
| | | | | GB | 2090612 | A ,B | 14-07-1982 |
| | | | | GB | 2090613 | A ,B | 14-07-1982 |
| | | | | OA | 6982 | A | 31-08-1983 |
| | | | | OA | 6975 | A | 31-07-1983 |
| | | | | OA | 6976 | A | 31-07-1983 |
| GB 2099449 | A | | 08-12-1982 | BE | 889140 | A1 | 01-10-1981 |
| | | | | BR | 8103643 | A | 18-01-1983 |
| | | | | DE | 3122453 | A1 | 30-12-1982 |
| | | | | FR | 2507205 | A1 | 10-12-1982 |
| | | | | JP | 57207695 | A | 20-12-1982 |
| | | | | NL | 8102760 | A | 03-01-1983 |
| | | | | US | 4364743 | A | 21-12-1982 |
| | | | | ZA | 8103812 | A | 30-06-1982 |
| WO 9525152 | A | | 21-09-1995 | FI | 95391 | B | 13-10-1995 |
| | | | | WO | 9525152 | A1 | 21-09-1995 |
| DE 10111857 | A1 | | 12-09-2002 | NONE | | | |
| WO 2004035713 | A | | 29-04-2004 | AU | 2003301273 | A1 | 04-05-2004 |
| | | | | WO | 2004035713 | A1 | 29-04-2004 |
| | | | | US | 2004128905 | A1 | 08-07-2004 |
| WO 03022960 | A | | 20-03-2003 | EP | 1425365 | A2 | 09-06-2004 |
| | | | | JP | 2005502764 | T | 27-01-2005 |
| | | | | WO | 03022960 | A2 | 20-03-2003 |
| | | | | US | 2004250466 | A1 | 16-12-2004 |
| GB 1505302 | A | | 30-03-1978 | CH | 593328 | A5 | 30-11-1977 |
| | | | | CH | 593327 | A5 | 30-11-1977 |
| | | | | AT | 361596 | B | 25-03-1981 |
| | | | | AT | 385475 | A | 15-08-1980 |
| | | | | BE | 829305 | A1 | 21-11-1975 |
| | | | | BR | 7503180 | A | 20-04-1976 |
| | | | | DE | 2522014 | A1 | 04-12-1975 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 04 25 8152

This annex lists the patent family members relating to the patent documents cited in  the above-mentioned European search report.
The members are as contained in the European Patent Office EDP file on
The European Patent Office is in no way liable for these particulars which are merely  given for the purpose of information.

15-06-2005

| Patent document cited in search report | | Publication date | Patent family member(s) | | Publication date |
|---|---|---|---|---|---|
| GB 1505302 | A | | DE | 2559480 A1 | 13-01-1977 |
| | | | DK | 223675 A | 23-11-1975 |
| | | | ES | 437855 A1 | 16-04-1977 |
| | | | FI | 751482 A | 23-11-1975 |
| | | | FR | 2272162 A1 | 19-12-1975 |
| | | | IT | 1032943 B | 20-06-1979 |
| | | | JP | 50161504 A | 27-12-1975 |
| | | | LU | 72543 A1 | 08-10-1975 |
| | | | NL | 7506014 A | 25-11-1975 |
| | | | NO | 751752 A | 25-11-1975 |
| | | | SE | 409468 B | 20-08-1979 |
| | | | SE | 7505790 A | 24-11-1975 |
| | | | SE | 7712603 A | 08-11-1977 |
| | | | ES | 453355 A1 | 16-02-1978 |
| WO 0206905 | A | 24-01-2002 | AU | 8968201 A | 30-01-2002 |
| | | | CA | 2418226 A1 | 24-01-2002 |
| | | | CN | 1443317 A | 17-09-2003 |
| | | | DE | 60106045 D1 | 04-11-2004 |
| | | | WO | 0206905 A2 | 24-01-2002 |
| | | | EP | 1301832 A2 | 16-04-2003 |
| | | | JP | 2004510222 T | 02-04-2004 |
| | | | US | 2003158680 A1 | 21-08-2003 |
| | | | US | 2002019722 A1 | 14-02-2002 |

EPO FORM P0459

For more details about this annex : see Official Journal of the European Patent Office, No. 12/82